# FASCICULE DE BREVET EUROPEEN

(11) **EP 2 454 116 B1**
(45) Date de publication et mention de la délivrance du brevet: **25.10.2017**
(21) Numéro de dépôt: 10742219.8
(22) Date de dépôt: 07.07.2010
(51) Int. Cl.: B60L 5/20, H01F 30/08, H01F 27/40, H01F 19/08

(54) **DISPOSITIF D'ISOLEMENT HAUTE TENSION DE MOYENS D'ALIMENTATION D'UN DISPOSITIF ÉLECTRIQUE CONNECTÉ À UN POTENTIEL HAUTE TENSION**
EINRICHTUNG ZUR HOCHSPANNUNGSISOLATION EINER VORRICHTUNG ZUR LEISTUNGSVERSORGUNG FÜR EINE ELEKTRISCHEN EINRICHTUNG DIE MIT EINEM HOCHSPANNUNGSPOTENTIAL VERBUNDEN IST
DEVICE FOR HIGH-VOLTAGE ISOLATION OF MEANS FOR SUPPLYING POWER TO ELECTRICAL DEVICE CONNECTED TO HIGH-VOLTAGE POTENTIAL

(30) Priorité: 17.07.2009 FR 0954971
(43) Date de publication de la demande: 23.05.2012
(73) Titulaire: Faiveley Transport Tours, 37700 Saint Pierre des Corps (FR)
(72) Inventeur: COYAUD, Martin, F-37000 Tours (FR)
(74) Mandataire: Santarelli
(86) Numéro de dépôt international: PCT/FR2010/051435
(87) Numéro de publication internationale: WO 2011/007081

(56) Documents cités:
- EP-A2- 0 853 300
- EP-A2- 1 947 465
- DE-A1-102004 042 101
- GB-A- 1 404 720
- US-A- 5 214 392

## Description

La présente invention concerne un dispositif d'isolement haute tension de moyens d'alimentation d'un dispositif électrique connecté à un potentiel haute tension.

Elle trouve notamment son application dans l'alimentation de nombreux dispositifs électriques, tels que des dispositifs électroniques composés de capteurs ou des appareils de coupure et de protection électrique.

Plus particulièrement, un tel dispositif d'isolement haute tension est utilisé en partie supérieure de la toiture d'un matériel roulant ferroviaire pour l'alimentation d'un dispositif électronique connecté à un potentiel haute tension délivré par une ligne caténaire.

Classiquement, une ligne caténaire peut présenter diverses tensions suivant le réseau ferroviaire, par exemple de 1500 V ou de 3000 V lorsqu'il s'agit d'une ligne caténaire à courant continu ou de 15000 V ou 25000 V lorsqu'il s'agit d'une ligne caténaire à courant alternatif.

Les dispositifs électriques reliés à une ligne caténaire doivent alors être isolés à des niveaux de tension bien supérieurs pour présenter une marge de sécurité et une fiabilité satisfaisante lors du fonctionnement du véhicule ferroviaire.

Dans la mesure où le dispositif électrique est référencé au potentiel de la ligne caténaire, les moyens d'alimentation d'un tel dispositif électrique, à partir d'une alimentation électrique basse tension, typiquement prise à partir de la batterie du véhicule ferroviaire, doivent être isolés.

Un transformateur d'isolement, tel que décrit par exemple par le document EP 1 947 465 au nom de la Demanderesse, est ainsi prévu, relié d'une part à une source électrique basse tension et d'autre part aux moyens d'alimentation du dispositif électrique.

Toutefois, cette solution présente l'inconvénient de recourir à un transformateur d'isolement présentant un volume et une masse importants dans le dispositif d'isolement haute tension.

On connaît également un dispositif d'isolement haute tension dans le document DE 102004042101, comportant un transformateur d'isolement pour alimenter des moyens d'alimentation d'un dispositif électrique connecté à un potentiel haute tension.

La présente invention a pour but de proposer un dispositif d'isolement haute tension de masse et volume réduits et dont l'espace intérieur peut être optimisé.

A cet effet, la présente invention concerne un dispositif d'isolement haute tension de moyens d'alimentation d'un dispositif électrique connecté à un potentiel haute tension, comportant un transformateur d'isolement adapté à alimenter les moyens d'alimentation, le transformateur d'isolement comprenant un moyen d'inductance primaire et un moyen d'inductance secondaire disposés en regard l'un de l'autre, à une distance fixe prédéterminée de manière à coupler magnétiquement le moyen d'inductance primaire et le moyen d'inductance secondaire.

Selon l'invention, le transformateur d'isolement est un transformateur sans noyau magnétique, au moins un élément insensible au champ magnétique s'étendant au travers desdits moyens d'inductance primaire et secondaire.

Ainsi, l'invention prévoit d'utiliser un transformateur sans noyau magnétique selon un montage fixe des moyens d'inductance primaire et secondaire, en regard l'un de l'autre.

Un tel transformateur sans noyau magnétique est utilisé classiquement pour le chargement d'appareils mobiles, du type téléphone portable, en tirant partie de la mobilité relative des moyens d'inductance primaire et secondaire qui peuvent être intégrés séparément l'un dans une base de chargement et l'autre dans l'appareil mobile et être placés en vis-à-vis lorsque l'appareil mobile est placé sur la base de chargement.

Grâce à l'utilisation selon un montage fixe d'un transformateur sans noyau, il est possible de libérer un espace important dans le dispositif d'isolement haute tension, espace traditionnellement occupé par le matériau magnétique de couplage des moyens d'inductance primaire et secondaire d'un transformateur à noyau.

Cet espace est ainsi occupé par un ou plusieurs éléments du dispositif d'isolement, insensibles au champ magnétique, qui s'étendent en traversant les moyens d'inductance primaire et secondaire, permettant ainsi d'optimiser la place occupée par les différents éléments du dispositif d'isolement.

Selon une caractéristique avantageuse de l'invention, le moyen d'inductance primaire et le moyen d'inductance secondaire sont constitués respectivement d'un bobinage d'une ou plusieurs spires, ledit au moins un élément insensible au champ magnétique étant logé dans un espace s'étendant au centre des bobinages.

Ainsi, grâce à l'espace libéré par l'absence de noyau magnétique couplant les bobinages des moyens d'inductance primaire et secondaire, il est possible de disposer des éléments divers traversant les bobinages en leur centre.

L'aménagement intérieur du dispositif d'isolement haute tension est ainsi optimisé pour loger différents types d'équipement dans la mesure où ceux-ci sont peu ou pas sensibles au champ magnétique auquel ils sont soumis lorsqu'ils sont disposés entre les moyens d'inductance primaire et secondaire du transformateur d'isolement.

En pratique, ledit au moins un élément est connecté au dispositif électrique.

Selon un mode de réalisation pratique de l'invention, le dispositif d'isolement haute tension comporte un boîtier, le transformateur d'isolement étant logé dans le boîtier et les moyens d'inductance primaire et secondaire étant noyés dans un matériau diélectrique à l'intérieur de ce boîtier.

Le montage à distance fixe prédéterminée des moyens d'inductance primaire et secondaire peut ainsi être obtenu simplement, en noyant ces moyens d'inductance directement dans un matériau diélectrique.

Selon une caractéristique avantageuse de l'invention, les moyens d'alimentation comportent des moyens de régulation adaptés à réguler l'amplitude de la tension de l'alimentation électrique dans les moyens d'alimentation en fonction d'une valeur seuil prédéterminée, les moyens de régulation étant adaptés à commander des moyens de court-circuit connectés en sorte d'un circuit résonnant secondaire du transformateur d'isolement.

Ainsi, la régulation de la tension de sortie du transformateur d'isolement est réalisée au niveau du circuit résonnant secondaire du dispositif, grâce aux moyens d'alimentation intégrant les moyens de régulation.

Une telle régulation évite de mettre en oeuvre une rétroaction au niveau de l'alimentation du circuit résonnant primaire du transformateur d'isolement.

Cette régulation au niveau du secondaire du transformateur d'isolement peut être réalisée de manière fiable dès lors que l'absence de matériau magnétique ou noyau couplant les moyens d'inductance primaire et secondaire du transformateur d'isolement permet d'obtenir la stabilité en température et dans le temps de ce transformateur d'isolement.

Dans un mode d'application préféré, le transformateur d'isolement est adapté à alimenter des moyens d'alimentation d'un dispositif électronique de mesure d'au moins une grandeur électrique, une ligne de transmission de signaux de mesure de cette grandeur électrique s'étendant dans le dispositif d'isolement haute tension, au travers dudit moyen d'inductance primaire et dudit moyen d'inductance secondaire du transformateur d'isolement.

Grâce au transformateur d'isolement sans noyau magnétique, il est possible de faire passer au travers des moyens d'inductance une ligne de transmission de signaux entre le dispositif électrique et un dispositif de réception de ces signaux en vue de leur utilisation.

De manière avantageuse, lorsque le dispositif électronique comprend des moyens de mesure d'une tension d'un courant électrique à haute tension, comportant un diviseur de tension résistif, au moins une résistance du diviseur de tension résistif s'étend au travers dudit moyen d'inductance primaire et dudit moyen d'inductance secondaire du transformateur d'isolement.

Le dispositif d'isolement haute tension selon l'invention permet ainsi également de loger une résistance au travers des moyens d'inductance, grâce à l'absence de matériau magnétique couplant ces moyens d'inductance.

Selon un second aspect, l'invention vise également l'utilisation du dispositif d'isolement haute tension décrit précédemment, en association avec un dispositif électronique de mesure du courant et/ou de la tension et/ou de l'énergie électrique délivré par une ligne caténaire et consommé par une chaine de traction d'un véhicule ferroviaire.

D'autres particularités et avantages de l'invention apparaîtront encore dans la description ci-après.

Aux dessins annexés, donnés à titre d'exemples non limitatifs :
- la figure 1 est un schéma bloc illustrant un dispositif d'isolement haute tension selon un mode de réalisation de l'invention ; et
- la figure 2 est un schéma illustrant l'utilisation d'un dispositif d'isolement haute tension selon l'invention en association avec un dispositif électronique de mesure.

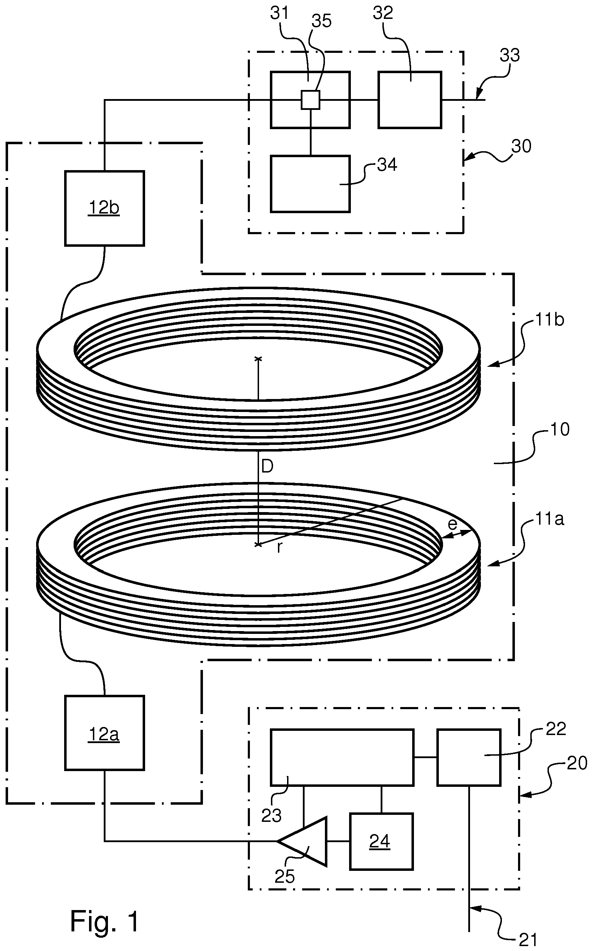

On va décrire tout d'abord en référence à la figure 1 un dispositif d'isolement haute tension selon un mode de réalisation de l'invention.

Dans son principe, le dispositif d'isolement illustré à la figure 1 comporte un transformateur d'isolement 10 adapté à alimenter des moyens d'alimentation qui se seront décrits ultérieurement et qui sont destinés à alimenter un dispositif électrique (non représenté à la figure 1) connecté à un potentiel haute tension.

Le transformateur d'isolement 10 est un transformateur sans noyau magnétique comprenant un circuit primaire et un circuit secondaire.

Chaque circuit primaire ou secondaire du transformateur d'isolement 10 est constitué d'un circuit résonnant série comprenant un moyen d'inductance monté en série avec une capacité.

En pratique, le transformateur d'isolement 10 illustré à la figure 1 comprend un moyen d'inductance primaire 11a et un moyen d'inductance secondaire 11b.

Le moyen d'inductance primaire 11a est connecté en série à une capacité 12a du circuit primaire et le moyen d'inductance secondaire 11b est connecté en série à une capacité 12b du circuit secondaire du transformateur d'isolement 10.

Le moyen d'inductance primaire 11a et le moyen d'inductance secondaire 11b sont disposés en regard l'un de l'autre de manière à être couplés magnétiquement sans la présence d'un noyau magnétique.

La distance D séparant les moyens d'inductance primaire et secondaire 11a, 11b est fixe et prédéterminée de manière à réaliser le couplage magnétique.

Cette distance D est choisie de manière à respecter les contraintes d'isolement du transformateur 10, de décharge partielle et de couplage entre les deux circuits résonnant, c'est-à-dire le circuit primaire 11a, 12a et le circuit secondaire 11b, 12b.

Cette distance D séparant les moyens d'inductance 11a, 11b est de quelques centimètres, et par exemple est comprise entre 2 et 10 cm, et de préférence entre 3 et 5 cm.

Comme bien illustré à la figure 1 dans ce mode de réalisation, le moyen d'inductance primaire 11a et le moyen d'inductance secondaire 11b sont constitués respectivement d'un bobinage, ici de plusieurs spires.

Bien entendu, ce bobinage peut être de formes quelconques dans un plan. Ici, à titre d'exemple non limitatif, ce bobinage est de forme annulaire.

Afin de favoriser le couplage magnétique et le transfert d'énergie dans le transformateur d'isolement, chaque bobinage 11a, 11b occupe une surface maximale en fonction de la place disponible dans le dispositif d'isolement.

Par ailleurs, la largeur e des spires du bobinage dans son plan est relativement faible par rapport au rayon r de chaque bobinage 11a, 11b.

A titre d'exemple non limitatif, la largeur e des spires (ou diamètre dans le cas d'une spire unique) est comprise entre 0,5 et 3 cm, et de préférence égale à 1 cm environ.

Le rayon r du bobinage est compris entre 3 et 10 cm, et de préférence entre 5 et 8 cm.

Ainsi, un espace libre important est créé au centre de chaque bobinage 11a, 11b.

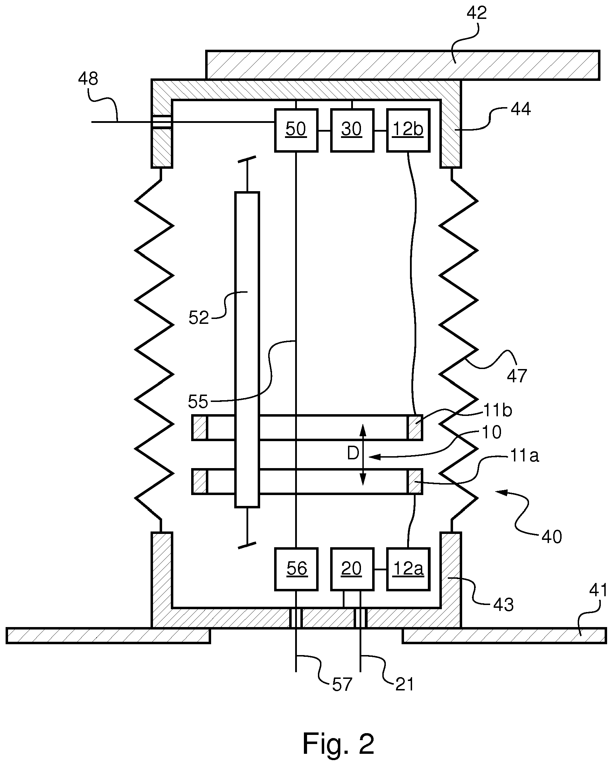

Comme cela sera décrit plus précisément en référence à la figure 2, un espace libre est ainsi disponible entre les bobinages 11a, 11b et au centre de ces bobinages 11a, 11b.

Cet espace libre peut être mis à profit pour la disposition d'un ou plusieurs éléments insensibles au champ magnétique créé par les moyens d'inductance primaire 11a et secondaire 11b. Ces éléments, dont des exemples seront décrits en référence à la figure 2, peuvent s'étendre au travers des moyens d'inductance primaire 11a et secondaire 11b, c'est-à-dire dans le mode de réalisation illustré, en traversant l'espace libre au centre des bobinages 11a, 11b.

Le transformateur d'isolement 10 est connecté, en entrée du circuit résonnant primaire 11a, 12a, à un circuit électronique de commande 20, destiné à alimenter ce circuit résonnant primaire 11a, 12a à partir de l'énergie électrique appliquée en entrée.

En pratique, le circuit électrique de commande 20 comporte en entrée une alimentation 21 reliée à une source d'énergie électrique (non représentée).

Cette source d'énergie électrique peut être quelconque, et par exemple, dans une application embarquée sur un véhicule ferroviaire, elle peut provenir d'une tension continue (basse tension) correspondant à la tension à bord du véhicule.

Le circuit électronique de commande 20 comporte à cet effet un filtre d'entrée 22 destiné à filtrer et redresser de façon connue l'énergie électrique alimentant le circuit électronique de commande 20.

Elle est ensuite mise à niveau et/ou régulée et/ou isolée par une alimentation 23 qui peut fournir ainsi classiquement les tensions intermédiaires nécessaires au fonctionnement des éléments internes du circuit électronique 20.

Cette mise à niveau et régulation permet de disposer d'une tension de valeur déterminée et fixe quelles que soient les variations de la tension d'alimentation du véhicule.

Par ailleurs, l'isolement permet de protéger l'alimentation 21 en cas de défaut d'isolement du dispositif d'isolement.

En outre, un oscillateur 24 à fréquence fixe et stable, par exemple à base de quartz, fournit une fréquence de référence F_{ref} à un amplificateur 25 monté en sortie de l'alimentation 23.

L'amplificateur 25 fournit un signal alternatif dont le contenu spectral contient la fréquence d'accord Fₚ du circuit résonnant primaire 11a, 12a du transformateur d'isolement 10.

Le signal de puissance en sortie de l'amplificateur 25 comporte ainsi une composante significative à la fréquence de référence F_{ref} désirée pour le circuit résonnant primaire 11a, 12a.

En pratique, un signal carré de puissance peut être généré à l'aide d'un pont complet à transistor commandé avec un rapport cyclique de 50%.

Ce circuit électronique de commande 20 alimentant le circuit primaire du transformateur d'isolement 10 est classique et n'a pas besoin d'être décrit plus en détail ici.

Le circuit résonnant primaire, constitué de la capacité 12a et du bobinage 11a possède une fréquence d'accord Fₚ voisine de la fréquence de référence F_{ref} de l'oscillateur 24.

Lors du fonctionnement de l'amplificateur 25 contrôlé par l'oscillateur 24, le circuit résonnant primaire 11a, 12a est excité à la fréquence de référence F_{ref}, c'est-à-dire au voisinage proche de sa fréquence d'accord Fₚ.

Une surtension significative, dépendant entre autre du facteur de qualité du circuit résonnant constitué par le montage en série du bobinage 11a et de la capacité 12a, apparaît aux bornes du bobinage 11a.

La forme de la tension apparaissant ainsi aux bornes du bobinage 11a est la somme d'une sinusoïde d'amplitude importante à la fréquence de référence F_{ref} et du signal de sortie de l'amplificateur 25.

Un flux magnétique de fréquence F_{ref} est ainsi généré, son amplitude étant conditionnée par le facteur de surtension du circuit résonnant primaire.

De manière connue, le courant primaire Iₚ est maximal à la fréquence d'accord Fₚ du circuit résonnant primaire 11a, 12a.

Le flux généré par le bobinage 11a du circuit primaire est intercepté partiellement par l'induit du circuit secondaire constitué par le bobinage 11b.

Comme décrit précédemment, le flux n'est pas guidé par un circuit magnétique, mais est dépendant de la distance D séparant les bobinages 11a, 11b.

Le matériau isolant électriquement les bobinages 11a, 11b n'a pas d'effet sur le flux magnétique généré par le bobinage 11a du circuit résonnant primaire, que cet isolement soit réalisé par de l'air ou par un matériau diélectrique de remplissage comme cela sera décrit ultérieurement en référence à la figure 2.

Le circuit résonnant secondaire constitué du bobinage 11b et de la capacité 12b possède une fréquence d'accord Fₛ voisine de la fréquence d'accord Fₚ du circuit résonnant primaire.

Ses caractéristiques sont choisies de manière à être identiques à celles du circuit résonnant primaire 11a, 12a.

Ainsi, le flux magnétique de fréquence F_{ref} généré par l'inductance 11a et intercepté par l'inductance 11b du circuit secondaire a pour conséquence de générer une tension aux bornes du bobinage 11b du circuit secondaire.

A la fréquence de référence F_{ref}, l'impédance du circuit résonnant secondaire est très faible car le circuit fonctionne proche de sa fréquence d'accord Fₛ.

On dispose alors d'une source de tension sinusoïdale en sortie du circuit résonnant secondaire, d'amplitude réduite par rapport à la tension mesurée aux bornes du bobinage 11b et de fréquence sensiblement égale à la fréquence de référence F_{ref}.

Cette tension constitue ainsi la source d'énergie des moyens d'alimentation 30.

Ces moyens d'alimentation 30 comportent de manière connue un redresseur 31 destiné à redresser le courant et la tension fournis par le circuit résonnant secondaire 11b, 12b du transformateur d'isolement 10.

Par ailleurs, un filtre 32 monté en sortie du redresseur 31 permet de délivrer une tension filtrée en sortie 33 des moyens d'alimentation 30, à destination d'un dispositif électrique à alimenter.

De préférence, comme décrit ici, les moyens d'alimentation 30 comportent également des moyens de régulation à une tension de consigne souhaitée pour le dispositif électrique alimenté.

En pratique, les moyens d'alimentation 30 comportent un circuit de régulation 34 coopérant avec le redresseur 31, commandé pour réguler le courant et la tension fournis.

Plus précisément, le circuit de régulation 34 contrôle l'amplitude de la tension redressée en sortie du redresseur 31 en agissant sur la charge présentée à la sortie du circuit résonnant secondaire 11b, 12b.

Ainsi, le circuit de régulation 34 est adapté à réguler l'amplitude de la tension de l'alimentation électrique dans les moyens d'alimentation 30 en fonction d'une valeur seuil prédéterminée.

Lorsque la tension dépasse cette valeur seuil prédéterminée, le circuit de régulation 34 est adapté à commander des moyens de court-circuit 35 connectés en sortie du circuit résonnant secondaire 11b, 12b du transformateur d'isolement 10.

Ces moyens de court-circuit 35 peuvent être formés de transistors et sont, dans ce mode de réalisation, intégrés dans le dresseur 31 commandé par le circuit de régulation 34.

Ainsi, le circuit de régulation 34 forme des moyens de régulation adaptés à comparer l'amplitude de la tension redressée en sortie du redresseur commandé 31 avec la valeur seuil prédéterminée et à court-circuiter la sortie au secondaire du transformateur d'isolement 10 en cas de dépassement de la valeur seuil prédéterminée.

Lorsque la sortie au secondaire du transformateur d'isolement 10 est court-circuitée, le courant dans le circuit résonnant secondaire 11b, 12b et la tension délivrée en sortie de la capacité 12b augmente alors légèrement, par l'amélioration du coefficient de surtension dû à la diminution de la charge résistive apparente constituée par le redresseur 31 et sa charge (c'est-à-dire ici le filtre de sortie 32 relié en sortie 33 au dispositif électrique alimenté).

Le redresseur 31 n'est alors plus alimenté en énergie et les moyens d'alimentation 30 fournissent l'énergie en sortie 33 au dispositif électrique grâce à l'énergie stockée dans le filtre de sortie 32.

Grâce au montage série des moyens d'inductance 11b et de la capacité 12b du circuit résonnant secondaire du transformateur d'isolement 10, il est possible d'utiliser des moyens de court-circuit 35 connectés au secondaire du transformateur sans surveiller la tension fournie par le circuit résonnant secondaire 11b, 12b du transformateur d'isolement 10.

A contrario, lorsque la tension redressée en sortie du redresseur commandé 31 est inférieure à une valeur seuil prédéterminée, les moyens de court-circuit 35 sont désactivés de telle sorte que le circuit résonnant secondaire 11b, 12b du transformateur d'isolement 10 est de nouveau connecté au redresseur 31, le courant électrique étant de nouveau délivré en entrée des moyens d'alimentation 30.

Ainsi, la régulation de la tension en sortie 33 des moyens d'alimentation 30 est intégralement réalisée au secondaire du transformateur d'isolement 10, sans nécessiter la rétroaction classiquement mise en oeuvre sur les transformateurs, par découpage au niveau de l'alimentation au primaire du transformateur d'isolement.

Cette régulation au secondaire est rendue possible notamment du fait de l'absence d'un matériau magnétique de couplage entre les moyens d'inductance primaire 11a et secondaire 11b.

En effet, dans un transformateur mettant en oeuvre un matériau magnétique pour favoriser le couplage magnétique des bobinages, la valeur des inductances primaire et secondaire est variable avec la température, du fait de la variation de la perméabilité du matériau magnétique avec la température.

Ainsi, bien que la mise en oeuvre de ce mode de régulation secondaire soit possible avec un transformateur à noyau magnétique, elle est peu avantageuse car le noyau magnétique augmente le couplage et diminue les fuites.

Le fonctionnement du circuit en résonnance accordé est rendu difficile.

Ainsi, lors du court-circuit mis en oeuvre dans la régulation décrite précédemment, le courant dans le circuit secondaire et la tension délivrée en sortie augmenteraient très fortement, ce qui n'est pas le cas ici avec un transformateur d'isolement sans noyau.

On va décrire à présent en référence à la figure 2 la mise en oeuvre d'un tel dispositif d'isolement en association avec un dispositif électronique de mesure, dans une application à un véhicule ferroviaire.

On souhaite fréquemment dans ce type d'application mesurer une grandeur électrique d'un signal électrique délivré par une ligne caténaire haute tension et consommé par une chaine de traction d'un véhicule ferroviaire.

En particulier, il est connu de mesurer le courant et/ou la tension délivrée par une ligne caténaire à un véhicule ferroviaire.

Il est également souhaitable de pouvoir mesurer l'énergie électrique délivrée par cette ligne caténaire afin de connaître la consommation électrique en temps réel du véhicule ferroviaire circulant sur une voie.

Le dispositif électronique de mesure est ainsi adapté à mesurer le courant et/ou la tension délivrée, et peut en outre comporter des moyens de calcul permettant, à partir de ce courant et cette tension, de calculer l'énergie électrique consommée.

Bien entendu, l'invention n'est pas limitée à un tel dispositif électronique de mesure mais peut s'appliquer à tout type de dispositif électrique ou électronique.

Par ailleurs, ce dispositif électronique de mesure peut être plus ou moins perfectionné et peut comporter par exemple, outre des moyens de mesure et de comptage d'énergie électrique, des moyens de télé-relevé permettant d'adresser à distance la consommation d'énergie ainsi mesurée.

On a illustré à titre d'exemple non limitatif à la figure 2, un dispositif électronique de mesure de tension délivrée par une ligne caténaire (non représentée à la figure 2).

Dans ce mode de réalisation, le dispositif d'isolement 40 est monté sur la toiture 41 d'un véhicule ferroviaire.

Ce dispositif d'isolement se présente sous la forme d'un pied disposé entre la toiture 41 du véhicule ferroviaire et une structure de prise de courant reliée à la ligne caténaire, et par exemple une barre haute tension ou un pantographe 42.

Le dispositif d'isolement 40 comporte à titre d'exemple non limitatif dans ce mode de réalisation une partie formant base 43 du dispositif d'isolement et une partie formant sommet 44 du dispositif d'isolement 40, la partie formant base 43 étant connectée à la toiture 41 du véhicule ferroviaire et la partie formant sommet 44 étant reliée à la barre haute tension ou pantographe 42.

Une partie intermédiaire 47, appelée tête du dispositif d'isolement 40, s'étend entre la partie formant base 43 et la partie formant sommet 44.

Cette structure de dispositif d'isolement constitue ainsi un boîtier dans lequel le transformateur d'isolement 10 décrit précédemment est logé.

Afin d'assurer la fonction d'isolement, le transformateur d'isolement 10, et notamment les moyens d'inductance primaire 11a et secondaire 11b sont noyés dans un matériau diélectrique à l'intérieur du boîtier 40.

A titre d'exemple non limitatif, ce matériau isolant peut être une résine en silicone.

Les éléments communs à la figure 1 portent les mêmes références numériques et ne seront pas redécrits ici.

Comme expliqué précédemment, du fait de l'utilisation d'un transformateur d'isolement 10 sans noyau, plusieurs éléments peuvent s'étendre au travers des moyens d'inductance primaire 11a et secondaire 11b du transformateur d'isolement 10.

Les éléments s'étendant ainsi entre les bobinages 11a, 11b et au travers de ces derniers doivent être insensibles au champ magnétique, c'est-à-dire ne pas être influencés ou peu influencés par la présence du champ magnétique existant entre les bobinages du transformateur d'isolement 10.

On a illustré ici à la figure 2 en sortie des moyens d'alimentation 30 un dispositif électronique de mesure 50. Ce dispositif de mesure 50 est référencé au potentiel de la caténaire et alimenté par les moyens d'alimentation 30.

Dans ce mode de réalisation, le dispositif de mesure 50 comporte une ligne d'entrée 48 permettant de connecter le dispositif de mesure 50 à d'autres dispositifs référencés au potentiel de la ligne caténaire, tel qu'un capteur de courant, ou encore à un système de communication et/ou géolocalisation GSM/GPS (acronyme des termes anglo-saxons Global Systems for Mobile communications/ Global Positioning Systems).

Dans ce mode de réalisation, l'élément traversant les moyens d'inductance primaire 11a et secondaire 11b est un élément connecté au dispositif de mesure 50 alimenté par les moyens d'alimentation 30.

Par ailleurs, un dispositif de mesure de tension peut être intégré à l'intérieur du dispositif d'isolement 40.

Il est associé à un diviseur de tension résistif permettant de mesurer la tension délivrée par la ligne caténaire au travers de la barre haute tension ou pantographe 42.

Comme bien illustré à la figure 2, au moins une résistance 52 du diviseur de tension résistif est montée au travers des moyens d'inductance primaire 11a, 11b.

Cette résistance 52 est par exemple de forme allongée et s'étend selon un axe perpendiculaire au plan des bobinages 11a, 11b, dans la hauteur de la tête 47 du dispositif d'isolement 40.

Dans ce mode de réalisation, la résistance 52 traverse à la fois les moyens d'inductance primaire 11a et les moyens d'inductance secondaire 11b, dans l'espace libre ménagé au centre des bobinages 11a, 11b.

Afin d'assurer l'insensibilité au champ magnétique de cette résistance 52, elle est de préférence réalisée en céramique et le dessin de son élément résistif est insensible au champ magnétique.

Bien entendu, tout autre élément insensible au champ magnétique pourrait être placé dans cet espace libre entre les bobinages 11a, 11b et au centre de ces bobinages.

Ici, une ligne de transmission 55 est en outre prévue pour transmettre, de manière isolée, les mesures réalisées au niveau du dispositif de mesure 50 à un équipement du véhicule ferroviaire.

Dans ce mode de réalisation, la ligne de transmission 55 peut être très généralement un guide d'onde optique ou un autre media de communication (transpondeur, émetteur/récepteur radiofréquence).

A cet effet, le dispositif de mesure 50 comporte des moyens d'émission de signaux.

A contrario, la ligne de transmission 55 est reliée à un récepteur 56 du signal qui est ensuite fourni en sortie 57 à un équipement prévu à cet effet du véhicule ferroviaire.

Le passage de cette ligne de transmission 55 au travers de la tête 47 du dispositif d'isolement 40 profite également de l'espace libre existant entre les bobinages 11a, 11b et en leur centre.

## Revendications

1. Dispositif d'isolement haute tension de moyens d'alimentation (30) d'un dispositif électrique (50) connecté à un potentiel haute tension, comportant un transformateur d'isolement (10) adapté à alimenter lesdits moyens d'alimentation (30), ledit transformateur d'isolement (10) comprenant un moyen d'inductance primaire (11a) et un moyen d'inductance secondaire (11b) disposés en regard l'un de l'autre, à une distance (D) fixe prédéterminée de manière à coupler magnétiquement ledit moyen d'inductance primaire (11a) et ledit moyen d'inductance secondaire (11b), **caractérisé en ce que** ledit transformateur d'isolement (10) est un transformateur sans noyau magnétique, au moins un élément (52, 55) insensible au champ magnétique s'étendant au travers desdits moyens d'inductance primaire (11a) et secondaire (11b).

2. Dispositif d'isolement haute tension conforme à la revendication 1, **caractérisé en ce que** ledit moyen d'inductance primaire (11a) et ledit moyen d'inductance secondaire (11b) sont constitués respectivement d'un bobinage (11a, 11b) d'une ou plusieurs spires, ledit au moins un élément (52, 55) insensible au champ magnétique étant logé dans un espace s'étendant au centre desdits bobinages (11a, 11b).

3. Dispositif d'isolement haute tension conforme à l'une des revendications 1 ou 2, **caractérisé en ce que** ledit au moins un élément (52, 55) est connecté audit dispositif électrique (50).

4. Dispositif d'isolement haute tension conforme à l'une des revendications 1 à 3, **caractérisé en ce que** le dispositif d'isolement haute tension (40) comporte un boîtier (43, 44, 47), ledit transformateur d'isolement (10) étant logé dans ledit boîtier (43, 44, 47) et lesdits moyens d'inductance primaire (11a) et secondaire (11b) étant noyés dans un matériau diélectrique à l'intérieur dudit boîtier (43, 44, 47).

5. Dispositif d'isolement haute tension conforme à l'une des revendications 1 à 4, **caractérisé en ce que** les moyens d'alimentation (30) comportent des moyens de régulation (34) adaptés à réguler l'amplitude de la tension de l'alimentation électrique dans lesdits moyens d'alimentation (30) en fonction d'une valeur seuil prédéterminée, lesdits moyens de régulation (34) étant adaptés à commander des moyens de court-circuit (35) connectés en sortie d'un circuit résonnant secondaire (11b, 12b) dudit transformateur d'isolement (10).

6. Dispositif d'isolement haute tension conforme à la revendication 5, **caractérisé en ce que** lesdits moyens d'alimentation (30) comportent, en entrée, un redresseur (31) connecté au circuit résonnant secondaire (11b, 12b) dudit transformateur d'isolement (10), ledit dispositif de régulation (34) étant adapté à comparer l'amplitude de la tension redressée en sortie dudit redresseur (31) avec ladite valeur seuil prédéterminée.

7. Dispositif d'isolement haute tension conforme à l'une des revendications 1 à 6, comprenant un transformateur d'isolement (10) adapté à alimenter des moyens d'alimentation (30) d'un dispositif électronique de mesure (50) d'au moins une grandeur électrique, **caractérisé en ce qu'**une ligne de transmission (55) de signaux de mesure de ladite grandeur électrique s'étend dans le dispositif d'isolement haute tension (40), au travers dudit moyen d'inductance primaire (11a) et dudit moyen d'inductance secondaire (11b) du transformateur d'isolement (10).

8. Dispositif d'isolement haute tension conforme à l'une des revendications 1 à 7, comprenant un transformateur d'isolement (10) adapté à alimenter des moyens d'alimentation (30) d'un dispositif électronique de mesure (50) d'une tension d'un courant électrique à haute tension, comportant un diviseur de tension résistif, **caractérisé en ce qu'**au moins une résistance (52) dudit diviseur de tension résistif s'étend au travers dudit moyen d'inductance primaire (11a) et dudit moyen d'inductance secondaire (11b) du transformateur d'isolement (10).

9. Dispositif d'isolement haute tension conforme à la revendication 8, **caractérisé en ce que** ladite au moins une résistance (52) est une résistance en céramique, le dessin de l'élément résistif de ladite résistance (52) étant insensible au champ magnétique.

10. Utilisation du dispositif d'isolement haute tension (40) selon l'une des revendications 1 à 9, en association avec un dispositif électronique de mesure (50) du courant et/ou de la tension et/ou de l'énergie électrique délivré par une ligne caténaire et consommé par une chaine de traction d'un véhicule ferroviaire.

## Patentansprüche

1. Einrichtung zur Hochspannungsisolation von Versorgungsmitteln (30) einer elektrischen Einrichtung (50), die mit einem Hochspannungspotential verbunden ist, umfassend einen Isolationstransformator (10), der dazu ausgelegt ist, die Versorgungsmittel (30) zu versorgen, wobei der Isolationstransformator (10) ein primäres Induktionsmittel (11a) und ein sekundäres Induktionsmittel (11b) aufweist, die einander gegenüberliegend in einem festen, vorbestimmten Abstand (D) angeordnet sind, so dass das primäre Induktionsmittel (11a) und das sekundäre Induktionsmittel (11b) magnetisch gekoppelt sind, **dadurch gekennzeichnet, dass** der Isolationstransformator (10) ein magnetkernfreier Transformator ist, wobei zumindest ein gegenüber dem Magnetfeld unempfindliches Element (52, 55) sich durch das primäre (11a) und das sekundäre (11b) Induktionsmittel hindurch erstreckt.

2. Einrichtung zur Hochspannungsisolation nach Anspruch 1, **dadurch gekennzeichnet, dass** das primäre Induktionsmittel (11a) und das sekundäre Induktionsmittel (11b) jeweils aus einer Wicklung (11a, 11b) mit einer oder mehreren Windungen bestehen, wobei das zumindest eine gegenüber dem Magnetfeld unempfindliche Element (52, 55) in einem Raum aufgenommen ist, der sich im Zentrum der Wicklungen (11a, 11b) erstreckt.

3. Einrichtung zur Hochspannungsisolation nach einem der Ansprüche 1 oder 2, **dadurch gekennzeichnet, dass** das zumindest eine Element (52, 55) mit der elektrischen Einrichtung (50) verbunden ist.

4. Einrichtung zur Hochspannungsisolation nach einem der Ansprüche 1 bis 3, **dadurch gekennzeichnet, dass** die Hochspannungsisolationseinrichtung (40) ein Gehäuse (43, 44, 47) enthält, wobei der Isolationstransformator (10) in dem Gehäuse (43, 44, 47) aufgenommen ist und das primäre (11a) und das sekundäre Induktionsmittel (11b) in einem dielektrischen Material innerhalb des Gehäuses (43, 44, 47) eingebettet sind.

5. Einrichtung zur Hochspannungsisolation nach einem der Ansprüche 1 bis 4, **dadurch gekennzeichnet, dass** die Versorgungsmittel (30) Regelungsmittel (34) enthalten, die dazu ausgelegt sind, die Amplitude der Spannung der Stromversorgung in den Versorgungsmitteln (30) in Abhängigkeit von einem vorbestimmten Schwellwert zu regeln, wobei die Regelungsmittel (34) dazu ausgelegt sind, Kurzschlussmittel (35) zu steuern, die am Ausgang eines sekundären Resonanzkreises (11b, 12b) des Isolationstransformators (10) verbunden sind.

6. Einrichtung zur Hochspannungsisolation nach Anspruch 5, **dadurch gekennzeichnet, dass** die Versorgungsmittel (30) am Eingang einen Gleichrichter (31) enthalten, der mit dem sekundären Resonanzkreis (11b, 12b) des Isolationstransformators (10) verbunden ist, wobei die Regelungseinrichtung (34) dazu ausgelegt ist, die Amplitude der gleichgerichteten Spannung am Ausgang des Gleichrichters (31) mit dem vorbestimmten Schwellwert zu vergleichen.

7. Einrichtung zur Hochspannungsisolation nach einem der Ansprüche 1 bis 6, umfassend einen Isolationstransformator (10), der dazu ausgelegt ist, Versorgungsmittel (30) einer elektronischen Messeinrichtung (50) zum Messen zumindest einer elektrischen Größe zu versorgen, **dadurch gekennzeichnet, dass** eine Übertragungsleitung (55) zum Übertragen von Messsignalen der elektrischen Größe sich in der Hochspannungsisolationseinrichtung (40) durch das primäre Induktionsmittel (11a) und das sekundäre Induktionsmittel (11b) des Isolationstransformators (10) hindurch erstreckt.

8. Einrichtung zur Hochspannungsisolation nach einem der Ansprüche 1 bis 7, umfassend einen Isolationstransformator (10), der dazu ausgelegt ist, Versorgungsmittel (30) einer elektronischen Messeinrichtung (50) zum Messen einer Spannung eines elektrischen Stroms unter Hochspannung zu versorgen, umfassend einen resistiven Spannungsteiler, **dadurch gekennzeichnet, dass** zumindest ein Widerstand (52) des resistiven Spannungsteilers sich durch das primäre Induktionsmittel (11a) und das sekundäre Induktionsmittel (11b) des Isolationstransformators (10) hindurch erstreckt.

9. Einrichtung zur Hochspannungsisolation nach Anspruch 8, **dadurch gekennzeichnet, dass** der zumindest eine Widerstand (52) ein Keramikwiderstand ist, wobei die Ausgestaltung des Widerstandselements des Widerstands (52) gegenüber dem Magnetfeld unempfindlich ist.

10. Verwendung der Einrichtung zur Hochspannungsisolation (40) nach einem der Ansprüche 1 bis 9 in Verbindung mit einer elektronischen Messeinrichtung (50) zum Messen von Strom und/oder von Spannung und/oder von elektrischer Energie, der bzw. die über eine Fahrleitung ausgegeben wird und von einem Antriebsstrang eines Schienenfahrzeugs verbraucht wird.

## Claims

1. A high-voltage isolator for the isolation of means (30) for supplying power to an electrical device (50) connected to a high-voltage potential, which isolator comprises an isolating transformer (10) suitable for supplying said power supply means (30), said isolating transformer (10) comprising a primary inductance means (11a) and a secondary inductance means (11b) placed facing each other a predetermined fixed distance (D) apart so as to magnetically couple said primary inductance means (11a) and said secondary inductance means (11b), **characterized in that** said isolating transformer (10) is an air-core transformer, at least one element (52, 55) insensitive to the magnetic field extending across said primary (11a) and secondary (11b) inductance means.

2. The high-voltage isolator as claimed in claim 1, **characterized in that** said primary inductance means (11a) and said secondary inductance means (11b) consist of respective winding (11a, 11b) of one or more turns, said at least one element (52, 55) insensitive to the magnetic field being housed in a space lying at the center of said windings (11a, 11b).

3. The high-voltage isolator as claimed in one of claims 1 or 2, **characterized in that** at least one element (52, 55) is connected to said electrical device (50).

4. The high-voltage isolator as claimed in one of claims 1 to 3, **characterized in that** said high-voltage isolator (40) includes a casing (43, 44, 47), said isolating transformer (10) being housed in said casing (43, 44, 47) and said primary (11a) and secondary (11b) inductance means being embedded in a dielectric inside said casing (43, 44, 47).

5. The high-voltage isolator as claimed in one of claims 1 to 4, **characterized in that** the power supply means (30) include regulating means (34) suitable for regulating the amplitude of the power supply voltage in said power supply means (30) as a function of a predetermined threshold, said regulating means (34) being suitable for controlling short-circuit means (35) connected at the output of a secondary resonant circuit (11b, 12b) of said isolating transformer (10).

6. The high-voltage isolator as claimed in claim 5, **characterized in that** said power supply means (30) comprise, as input a rectifier (31) connected to the secondary resonant circuit (11b, 12b) of said isolating transformer (10), said regulating device (34) being suitable for comparing the amplitude of the rectified voltage as output by said rectifier (31) with said predetermined threshold value.

7. The high-voltage isolator as claimed in one of claims 1 to 6, comprising an isolating transformer (10) suitable for supplying power supply means (30) of an electronic measurement device (50) for measuring at least one electrical quantity, **characterized in that** a transmission line (55) for transmitting signals corresponding to the measurement of said electrical quantity extend, in the high-voltage isolator (40), across both said primary inductance means (11a) and said secondary inductance means (11b) of the isolating transformer (10).

8. The high-voltage isolator as claimed in one of claims 1 to 7, comprising an isolating transformer (10) suitable for supplying power supply means (30) of an electronic device (50) for measuring a voltage of a high-voltage electrical current, including a resistive voltage divider, **characterized in that** at least one resistor (52) of said resistive voltage divider extends across both said primary inductance means (11a) and said secondary inductance means (11b) of the isolating transformer (10).

9. The high-voltage isolator as claimed in claim 8, **characterized in that** said at least one resistor (52) is a ceramic resistor, the design of the resistive element of said resistor (52) being insensitive to the magnetic field.

10. The use of the high-voltage isolator (40) as claimed in one of claims 1 to 9 in combination with an electronic device (50) for measuring the current and/or the voltage and/or the electrical power delivered by a catenary line and consumed by a traction system of a railroad vehicle.
